# EUROPEAN PATENT APPLICATION

(11) **EP 0 786 617 A2**
(43) Date of publication of application: **30.07.1997**
(21) Application number: 97300445.0
(22) Date of filing: 24.01.1997
(51) Int. Cl.: F16L 19/00

(54) **Tube coupling locking device**

(30) Priority: 24.01.1996 US 593531
(71) Applicant: CAJON COMPANY, Macedonia Ohio 44056 (US)
(72) Inventor: Fisher, Ronald K., Ravenna, Ohio 44266 (US); Babuder, Gerald A., Mentor, Ohio 44060 (US); Doty, David L., Twinsburg, Ohio 44087 (US); Olechnowicz, Benjamin J., Akron, Ohio 44333 (US)
(74) Representative: Cook, Anthony John

(57) **Abstract**

A locking assembly for preventing undesired loosening of a made-up coupling includes a cooperating pair of rigid lock members that encircle about a coupling nut with one of the lock members having an end connected to a second cooperating coupling nut or the body of an associated fluid device. The cooperating lock members are arranged to prevent relative rotation between the encircled coupling nut and the cooperating coupling nut or associated fluid device.

## Description

### Background of the Invention

The subject invention is directed toward the art of tube couplings and, more particularly, to a device intended to prevent undesired loosening of a threadedly connected tube coupling.

The device of the invention is especially suited for use with union type couplings and will be described with reference thereto; however, the invention can be used with other types of couplings including couplings constituted as an integral part of a flow device such as a valve.

One commonly used type of tube coupling comprises male and female body components joined by cooperating threads that permit connection and disconnection by relative rotation about the tubing centerline (see, for example, U.S. Patent Nos. 5,135,269 and 5,066,051). The conditions to which the connected coupling is subjected can sometimes, over a period of time, cause loosening and resultant leakage. Although this rarely happens with a properly made-up, fully torqued fitting, in certain environments and when handling certain fluids, any possibility of leakage cannot be tolerated.

Many different types of lock devices have been proposed in the prior art for the prevention of random, undesired loosening of such couplings. However, these prior art devices have generally suffered from one or more disadvantages or defects. For example, certain prior art lock designs require installation prior to coupling makeup, and retro-fitting is not possible without system disassembly. With certain other designs, it has sometimes been necessary to locate the coupling components in a particular aligned relationship before the devices will function properly.

### Summary of the Invention

Accordingly, a need exists for an improved locking assembly which can be used on tube couplings and fluid devices of the type having integral tube coupling ends. In particular, and in accordance with one aspect of the invention, there is provided a tube coupling assembly that comprises first and second coupling body sections having cylindrical end portions joined by axially interconnected male and female threaded portions with each body section having wrench flats formed in parallel pairs on opposite sides thereof. A releasable locking clamp is provided to prevent undesired unthreading of the connected first and second body sections. The locking clamp includes a first clamp member having a first end with spaced parallel, rigid arms engaged with the wrench flats on opposite sides of the first body section. A second end of the first clamp member has a rigid, concave configuration engaged about the second coupling body section. A second clamp member with a clamping surface of concave configuration is engaged about the second coupling body section in opposed relationship to the second end of the first clamp member and is joined thereto by releasable connecting means to clamp to the second body section. The relationship between the locking clamp and the coupling body sections is such that the male and female threaded end portions cannot be disconnected or cannot loosen when subject to vibration, inadvertent mechanical engagement, and environmental changes such as temperature or the like.

Preferably, each of the concave clamping surfaces of the first and second clamp members are provided with closely spaced, axially extending grooves to increase the gripping ability relative to the second body section.

In accordance with a further aspect of the invention, there is provided a tube coupling assembly that includes a tube coupling joining a pair of tubes and having a central body terminating in first and second threaded ends with a separate coupling nut threadedly connected to each of the first and second ends. A releasable lock is provided for preventing undesirable unthreading of the coupling nuts from the first and second threaded ends of the central body. The lock includes a clamp body member extending adjacent the central body with a first end adjacent the first end of the central body and a second end adjacent the second end of the central body. Clamp means are carried on the first and second ends of the clamp body for gripping the coupling nuts and preventing relative rotation between the coupling nuts and the central body in directions which could cause unthreading of the nuts. The clamp means include cooperating first and second clamp elements joined by releasable connecting means for causing the clamp elements to be driven toward one another to grip the coupling nuts therebetween.

Preferably, at least one of the first clamp elements has a concave configuration and the associated second clamp element has a corresponding concave configuration.

In accordance with yet another aspect of the invention, a fluid system coupling device is provided that comprises a main coupling body having a flow passage extending therethrough and terminating in first and second ends. Fluid tubes are connected to the first and second ends of the flow passage and the main coupling body by separate coupling means each including a generally cylindrical, internally threaded female coupling nut threadedly joined to the body at the first and second ends of the passage. A locking clamp assembly for preventing desired movement of the female coupling nuts relative to the main coupling body is provided and generally includes a rigid clamp body extending along the main coupling body and having a first end joined to one of the female coupling nuts and a second end including a clamp assembly for encircling the other coupling nut. The clamp assembly includes a clamp member releasably connected to the rigid clamp body by adjustable connecting means for clamping the clamp member to the said other female nut member. The clamp member includes first and second end portions with the first end portion connected to the clamp body by hinge means, and the second end portion of the second clamp member connected to the clamp body by a threaded connector.

Preferably, both the first and second end of the rigid clamp body include the same clamp arrangement using adjustable connecting means for clamping the clamp members to their respective female nut members.

The design allows the locking clamp to be formed as a relatively inexpensive but rigid metal stamping. In addition, as can be seen, the design is such that it can be readily applied and removed from a selected coupling assembly without disassembling the fluid system.

In accordance with a further and more limited aspect of the invention, it is desirable to have the first and second clamp members hingedly joined so as to facilitate installation and removal from clamping relationship with the tube coupling body sections. By the use of the hinge connection, a single fastener can be used to draw the clamp members into engaged, clamped and locked position.

In addition to its use on a tube coupling, the invention can be applied to other types of fluid system devices such as valves or the like wherein an integral coupling member is provided. In such cases, the first clamping member can be rigidly but releasably connected directly to the body of the fluid system device while the coupling nut engaging portions are releasably engaged about the associated coupling nut.

Preferred embodiments of the invention provide:-
a locking assembly which can be used readily on tube couplings and flow system devices such as valves and the like;
a device of the general type described which can be readily installed and quickly removed from tube couplings;
a locking clamp assembly that is of simple design and readily adaptable to a variety of different sizes and styles of coupling devices;
a lock device of the type described that can be loosened and slid axially to allow servicing of the coupling without complete removal of the lock device;
a coupling nut locking clamp assembly that is adaptable for use in conjunction with a variety of flow system devices including valves.

### Brief Description of the Drawings

The above and other advantages will become apparent from the following description when read in conjunction with the accompanying drawings wherein:
FIGURE 1 is a perspective view of a tube coupling assembly of the type to which the subject invention is applicable;
FIGURE 2 is a perspective view of the preferred form of releasable locking clamp formed in accordance with the subject invention;
FIGURE 3 is a perspective view showing the tube coupling assembly of FIGURE 1 with the releasable locking clamp of FIGURE 2 applied thereto;
FIGURE 4 is an elevational view of one of the components of the locking clamp assembly of FIGURE 2;
FIGURE 5 is a top plan view of the components shown in FIGURE 4;
FIGURE 6 is a side elevational view of the second main component of the locking clamp of FIGURE 2;
FIGURE 7 is a top plan view of the FIGURE 6 component;
FIGURE 8 is a perspective view of a valve having an integrally arranged coupling nut on an inlet with a second form of locking clamp assembly shown in position thereon;
FIGURE 9 is a top plan view of the main locking clamp element of the FIGURE 8 embodiment;
FIGURE 10 is a view taken on lines 10-10 of FIGURE 9;
FIGURE 11 is a side elevational view of a tube coupling device formed in accordance with a third embodiment of the invention and applied to an elbow-type coupling;
FIGURE 12 is a view taken on line 12-12 of FIGURE 11;
FIGURE 13 is a view like FIGURE 11 but showing a modified form of the FIGURE 11 embodiment;
FIGURE 14 is a side elevational view of a further embodiment of the invention as applied to a modified form of coupling;
FIGURE 15 is a perspective view of a valve having a modified form of locking clamp assembly applied thereto;
FIGURE 16 is an exploded perspective view of the locking clamp assembly of the FIGURE 15 embodiment;
FIGURE 17 is a perspective view of a further form of locking clamp assembly shown applied to a valve; and,
FIGURE 18 is an exploded perspective view of the locking clamp assembly of FIGURE 17.

### Detailed Description of the Preferred and Alternate Embodiment

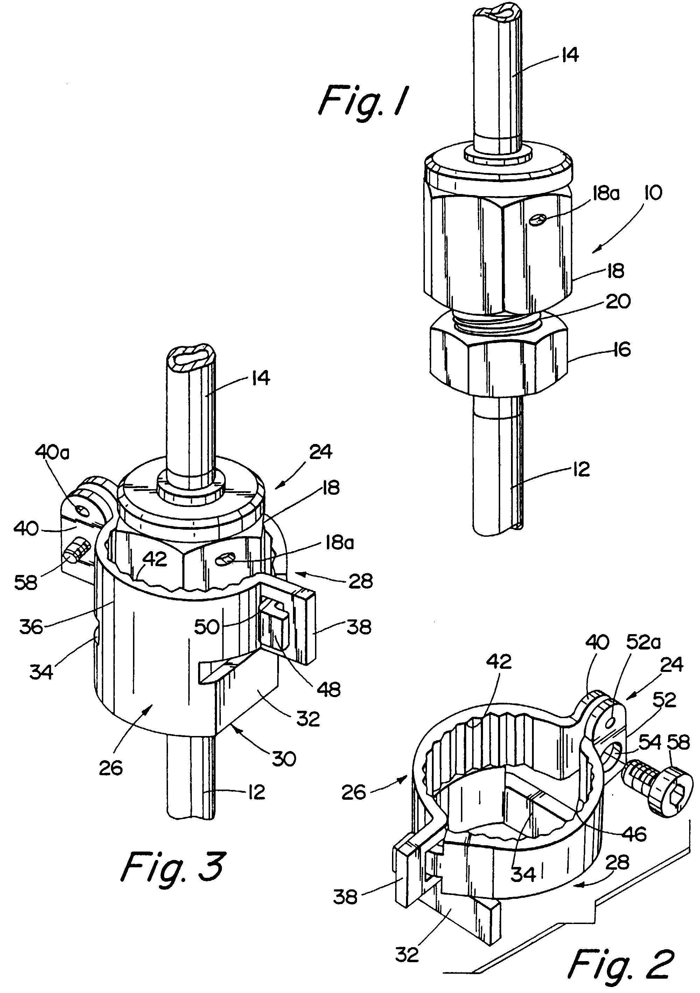

Referring now to the drawings wherein the showings are for the purposes of illustrating the preferred embodiment of the invention only and not for purposes of limiting same, FIGURES 1 through 3 best indicate the overall arrangement and construction of the preferred form of the invention. Referring in particular to FIGURE 1, the device of the subject invention is particularly suited for use in preventing undesired loosening and inadvertent disconnection of a tube coupling assembly of the general type shown in FIGURE 1. As shown, the coupling assembly **10** of FIGURE 1 is intended to releasably join in flow relationship a pair of aligned tube sections **12** and **14**. The coupling assembly broadly includes a pair of cooperating first and second threadedly engaged coupling body sections **16** and **18**. The body section **16** is generally shown as a male body section having a male threaded end portion **20** that is received in a correspondingly threaded opening in the main female body section **18**. The coupling nuts or body sections **16, 18** act to move cooperating internal seal surfaces into sealingly engaged position during tightening of the two body sections. It should be noted that, as is customary, the external surfaces of the somewhat cylindrical body sections are provided with oppositely disposed sets of wrench flats to facilitate the tightening and release of the coupling sections. In the subject embodiment, the wrench flat surfaces have a hex layout.

In order to prevent the tube coupling assembly of FIGURE 1 from being loosened through vibrations or other environmental changes, the subject invention proposes a locking clamp assembly **24** which is best illustrated in FIGURES 2 and 3. As shown therein, the locking clamp assembly **24** includes a first clamp member **26** and a cooperating second clamp member **28** that is arranged for releasable connection thereto. The first clamp member **26** includes a first lowers (as shown in FIGURES 2 and 3) end portion **30** that carries an interconnected pair of laterally spaced, generally flat and rigid arms **32** and **34** which are sized and spaced so as to slidably engage and closely grip the opposed wrench flat surfaces of the first coupling body section **16**. This relationship can best be seen in FIGURE 3 wherein the arms **32** and **34** are in engaged position on the wrench flats of body section **16**.

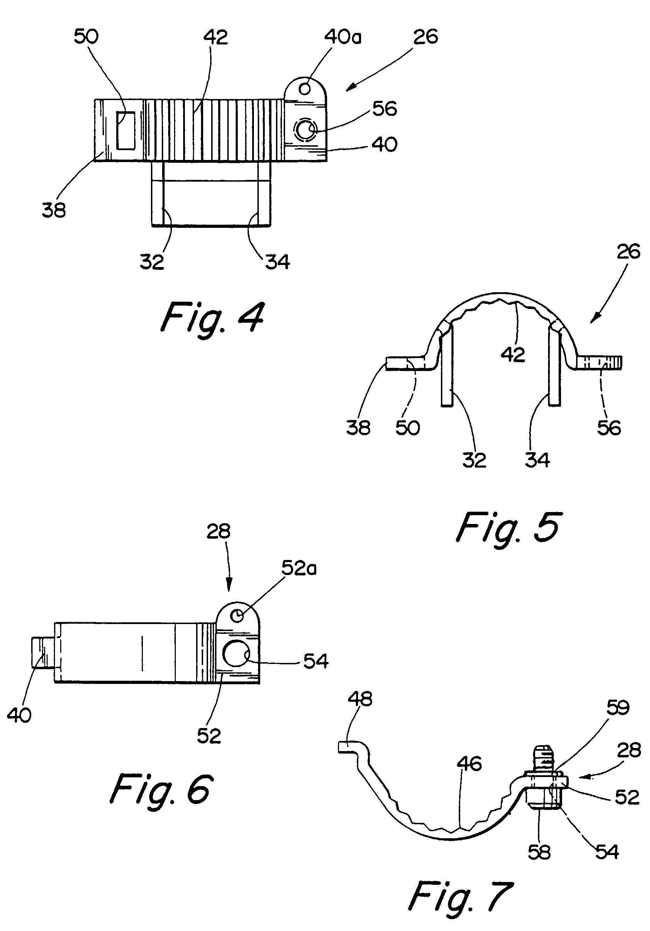

The first clamp member **26** further includes a second end that is integral with the first end and has a rigid concave portion **36** arranged to closely engage about the second coupling body section **18**. Laterally extending flange end portions **38** and **40** directly join to the concave section **36** as illustrated in FIGURES 2 and 3. Preferably, the interior clamping surface of the concave section **36** is provided with a multiplicity of closely spaced grooves contoured for engaging the corners between intersecting wrench flats on the second body section **18**. The grooved portions **42** are formed by intersecting planar surfaces arranged to intersect at the same angle as the wrench flats on the body section **18**. The arrangement of these grooved portions **42** can best be seen in FIGURE 5.

The first clamp member **26** is clamped and held in engaged position on the coupling assembly **10** by the cooperating clamp member **28**. Member **28** is shown in FIGURES 2 and 3 but is more fully detailed in FIGURES 6 and 7. As illustrated, the clamp member **28** has a concave clamping surface **46** generally corresponding in shape to the previously-mentioned concave clamping surface of the first clamp member **26**. The opposite ends of the clamp member **28** are arranged for releasable connection with the end flanges **38, 40** of the first clamp member **26**. A first end of member **28** terminates in a tab portion **48** that is bent in an angular configuration and adapted to be received through an opening **50** formed in the end flange **38** of member **26**. This provides a hinge-like connection between the clamping members **26, 28**. At its opposite end, the second clamp member **28** is provided with a flange end **52** having a fastener receiving opening **54** extending therethrough. Similarly, the flange end **40** of clamp member **26** is also provided with a fastener receiving opening **56** that is arranged so that when the components are in their assembled position shown in FIGURES 2 and 3, the openings **54** and **56** are in alignment for suitable receipt of a fastener therethrough. The fastener could, of course, be a fixed, permanent fastener such as a rivet or, alternatively, a removable fastener such as a bolt or screw. In the subject embodiment, the opening **56** is internally threaded and a socket head machine screw **58** is arranged to extend through opening **54** into threaded engagement with opening **56** to allow an adjustable and releasable clamping of the clamp members **26, 28** in engagement on the coupling assembly **10**. Preferably, a plastic retaining washer **59** holds screw **58** in place on member **28** (see FIGURE 7) to facilitate final assembly to member **26** during makeup. It is also desirable to silver plate screw **58** to provide reduced assembly torque and extend thread life.

The interior clamping surface **46** of the second clamp member **28** is also preferably provided with longitudinally extending grooves in the nature of grooves **42** of the first component **26**. Thus, a firm gripping is provided with respect to the coupling **10**.

The tabs **52** and **40** are further provided with small openings **52a** and **40a** for receipt of safety or seal wires if desired.

If the coupling is provided with leak test ports such as ports **18a** shown in FIGURES 1 and 3, it is highly desirable that the axial length of the second end **36** and the clamp member **28** be dimensioned to eliminate possible blocking of the test ports. It should also be noted that the subject design is preferably dimensioned such that when the retaining screw **58** is loosened, the clamp assembly can be slid downwardly off the coupling (as viewed in FIGURE 3) without full disassembly of, or removal of, clamp member **28**. Thus, access to the coupling for servicing, seal replacement, or the like is facilitated.

It is also highly desirable to dimension the clamp members relative to the coupling such that when made up on the coupling, the opposed faces of flanges **40** and **52** come into contact to provide an indication of full makeup. The dimension should, of course, be such that loosening through inadvertent contact with the components, vibration, and temperature changes is not possible. At the same time, however, the torque required to tighten the fastener to the fully engaged position should not be unduly high.

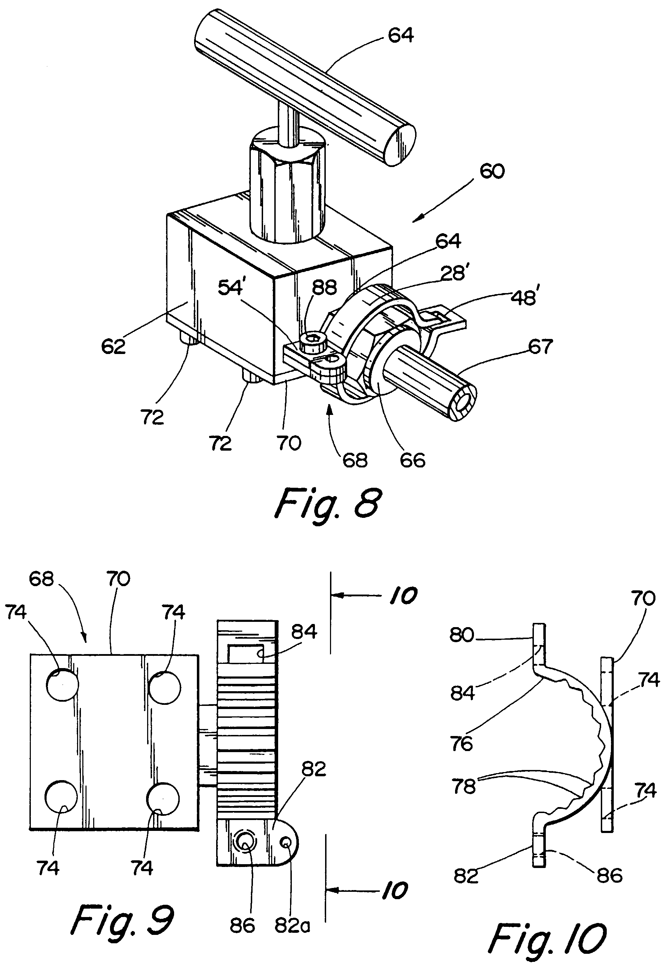

A further embodiment of the invention is illustrated in FIGURES 8 through 10. This embodiment is particularly suited for use on flow system devices such as valves that include a coupling component incorporating a coupling nut directly connected to the inlet or outlet flow passages from the associated fluid device. In the FIGURE 8 showing, a valve **60** has a generally rectangular body **62** including an internal valve chamber. A valve element (not shown) is moved between open and closed positions by a manually operated handle **64**. The valve includes an inlet or outlet passage **64** which has an integral male threaded end arranged to allow connection to a corresponding female coupling nut member **66** on a supply or discharge fluid passage **67** to which the valve is to be connected.

In the FIGURES 8 - 10 embodiment, the locking clamp assembly includes a first clamp member **68** that has a first end **70** in the form of a rectangular plate portion that can be connected to the underside of the valve body **60** by a plurality of machine screws or the like **72.** The screws **72** are arranged to extend through openings **74** formed in plate **70** into threaded openings in the valve body. The second end of the first clamp member **68** is rigidly and integrally connected to the first end and includes a concave shaped portion **76** that is sized and positioned so as to closely engage about the underside of the female coupling nut **66** when the end **70** is attached in position on the valve body **62**. The portion **76** is basically the same in shape and configuration as the second end portion **42** of the previously-discussed clamping member **26**. That is, the concave shaped portion **76** is provided with the longitudinally extending, closely spaced grooves **78** in the manner of previously-discussed grooves **42**. Additionally, terminal end flange portions **80** and **82** extend laterally outwardly with portion **80** including an opening **84**. The opposite end flange **82** includes a threaded central opening 86 and a safety wire opening **82a** as best illustrated in FIGURE 9. This arrangement allows a second clamp member identical to previously-discussed clamp member **28** to be mounted in clamping and opposed position to the concave portion **76**. In the FIGURE 8 showing, the second clamp member is identified as **28'** and is, as mentioned, identical in structure and design to the previously-mentioned clamp member **28** shown in FIGURES 6 and 7. The end tab **48'** extends through the opening **84** to provide a hinge-like connection between members **68** and **28'**. A threaded fastener in the form of a socket head machine screw **88** extends through opening **54'** and engages in the threaded opening **86** on flange portion **82**. Thus, the coupling nut **66** can be locked in its connected position to prevent inadvertent disconnection or loosening.

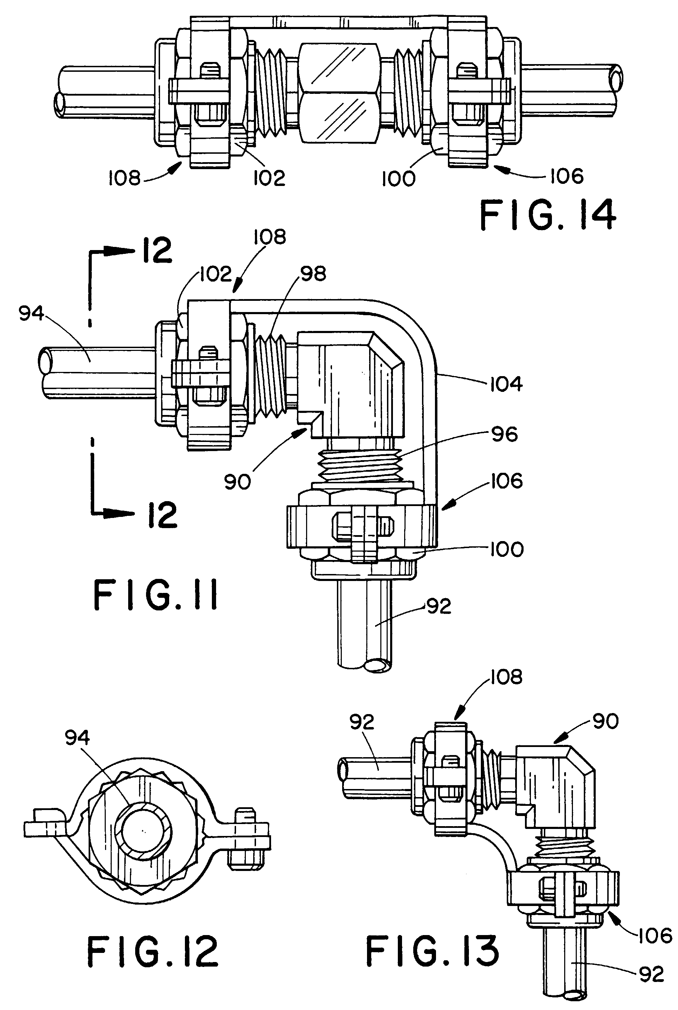

As is readily apparent, the coupling locking device of the invention can be applied to many different types of fittings and fluid system devices. For example, referring to FIGURES 11 and 12, a third embodiment of the invention is illustrated. In this embodiment, the tube coupling locking device is applied to an elbow-type tube coupling having a rigid main body **90** provided with a central through flow passage terminating in outlet ends to which are connected cooperating fluid flow tubes **92, 94.** The coupling is shown as having threaded male ends **96, 98** to which are fitted female coupling nuts **100, 102** having a hexagonal outer configuration. The coupling locking device itself has many features or elements in common with the FIGURES 1 - 7 embodiment. Elements the same as or closely similar to those of the FIGURES 1 - 7 embodiment are identified with the same reference numeral differentiated by a double prime suffix ("). Broadly, the locking device is formed from a rigid suitable material, such as steel, and has a central first clamp body 104 that is somewhat strap-like and extends generally along the main coupling body **90** with its opposite ends **106, 108** clampingly joined in a releasable manner to the female coupling nuts **100, 102**. The joining of the rigid clamp body is accomplished by locking clamp assemblies **110, 112** which are substantial duplicates of those previously described with respect to the first two embodiments. In particular, the locking clamp assemblies include first concave clamp members **26"** formed at the end of the rigid clamp body **104** and arranged to generally conform and extend about approximately 180° of the associated female coupling nut. Preferably, as best seen in FIGURE 12, the interior of the contoured end portion of the clamp members **26"** is provided with grooved portions **42"** as previously described. Associated with the contoured portion of the rigid clamp body is a second clamp member **28"** that is releasably connected to the associated first clamp member **26"** and contoured and arranged as shown in FIGURES 6 and 7. In particular, a hinge arrangement is provided at one end and a threaded fastener **58"** positioned so as to extend through the threaded opening in the opposed portion of the first clamp member **26"**. The threaded fastener is in the form of a conventional retaining screw, but many types of fasteners or connectors could be used as can be appreciated.

FIGURE 13 shows a slightly modified form of the invention wherein the rigid clamp body is arranged so as to extend about the interior side of the elbow coupling. It should, of course, be understood that the exact location and conformation of the rigid clamp body located intermediate the contoured end portions could take many forms depending upon the environment and/or the shape of the tube coupling device. It should be appreciated that this general arrangement could be used with a variety of coupling having many different shapes, such as crosses, tees, and the like. Additionally, as shown in FIGURE 14, this system could be applied in the manner shown in FIGURE 14 to straight, double-ended coupling device. Note that in FIGURE 14, the intermediate rigid clamp body is sized and arranged so as to allow the opposed coupling nuts to be gripped and held in position.

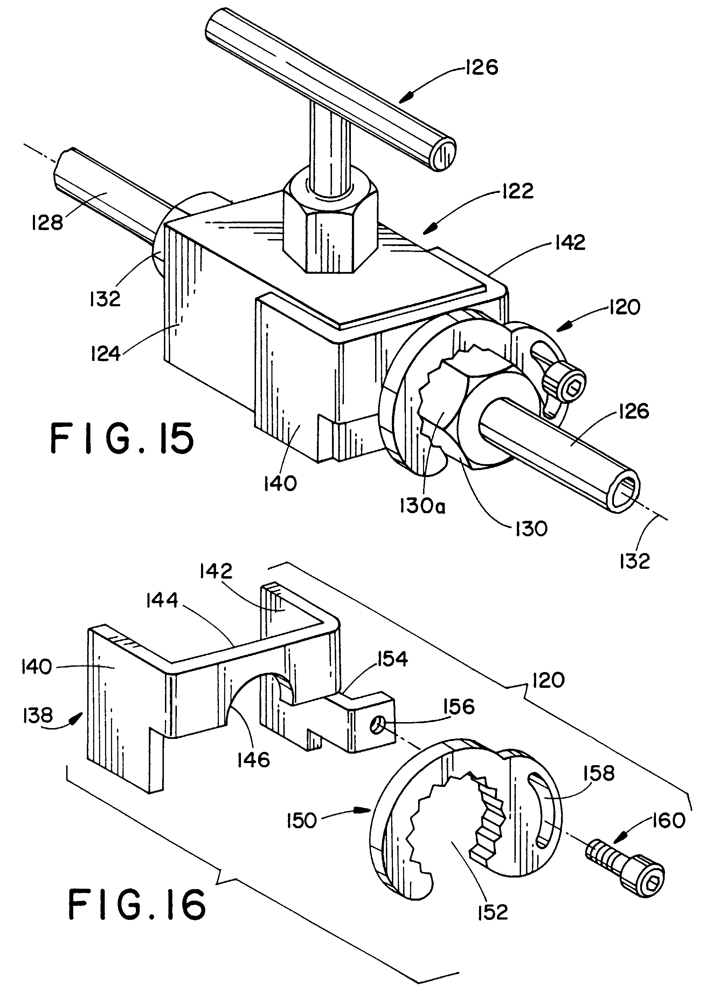

FIGURE 15 shows a modified form of locking clamp assembly **20** applied to a fluid system device **122** which, in this embodiment, is a relatively standard valve having a main body **124** of generally rectangular block-like configuration. An operating handle assembly **126** is provided for controlling movement of a valve element located within an internal valve chamber (not shown) and connected to suitable inlet and outlet passages. The valve body includes externally threaded cylindrical inlet and outlet passages to which are connected suitable fluid tubes **126, 128** by coupling assemblies including internally threaded female coupling nuts **130, 132**.

The locking assembly **120** is shown applied to coupling nut **130** to prevent undesired rotation of the coupling nut about the axis **132** to thereby eliminate inadvertent loosening of the made-up coupling which joins tube **126** to valve **122**. It should, of course, be recognized that a similar locking assembly could be applied to the coupling nut **132**, if desired.

In the subject embodiment, and as best shown in FIGURE 16, the locking assembly **120** includes a first rigid body member **138** formed of metal to have a generally U-shaped configuration in plan. Member **138** comprises a first pair of spaced wall portions **140** and **142** that are sized and spaced to closely engage on opposite sides of the valve body **124** as best shown in FIGURE 15. The walls **140** and **142** comprise engagement portions which receive the body in a manner to prevent rotation of the first member **138** relative to the body about the axis **132**. A connecting web or end wall member **144** joins the outer ends of the walls **140, 142** in the manner illustrated in FIGURE 16. A suitable cutout area **146** is arranged and sized so as to extend downwardly between the inner end of the coupling nut **130** and the associated end wall of the valve body **124.** This arrangement tends to prevent undesired movement of the body **138** in directions parallel to axis **132.**

Associated with the first rigid body **138** of the locking assembly **120** is a second rigid member **150** having a central opening **152** shaped and contoured to slide axially onto the coupling nut **130** and positively engage with the coupling nut by virtue of interengagement between the corners of the hex nut configuration of the coupling nut **130** or by engaging the opposed pairs of wrench flats **130a** in the manner of a wrench or the like. The member **150** is thus prevented from rotating relative to the coupling nut **130** because of the noted interengagement. The assembly is further provided with means for releasably connecting the second member **150** with the first rigid body **138** in a range of positions of relative rotation required by the particular location of the coupling nut after the joint has been made up. That is, the relative positioning of the first member **138** relative to the second member **150** depends to some extent upon the position of the individual coupling nut to which the assembly is being applied. In the subject embodiment, this connecting portion includes an arm member **154** that extends outwardly from the member **138** and terminates in an end portion having a threaded opening **156** formed therethrough. An arcuate opening **158** is formed through the second member **150** at a radial distance outwardly to correspond to the location of the threaded opening **156**. This arcuate opening **158** allows some relative adjustment between the first component **138** and the second component **150** and, further, allows positioning of a threaded clamp nut **160** through the opening **158** into threaded engagement with the opening **156** to firmly clamp the second member **150** to the first member **138** in the relationship shown in FIGURE 15. When clamped in this manner, the coupling nut **130** cannot be loosened either through vibrations or even intentionally without first releasing the screw **160**.

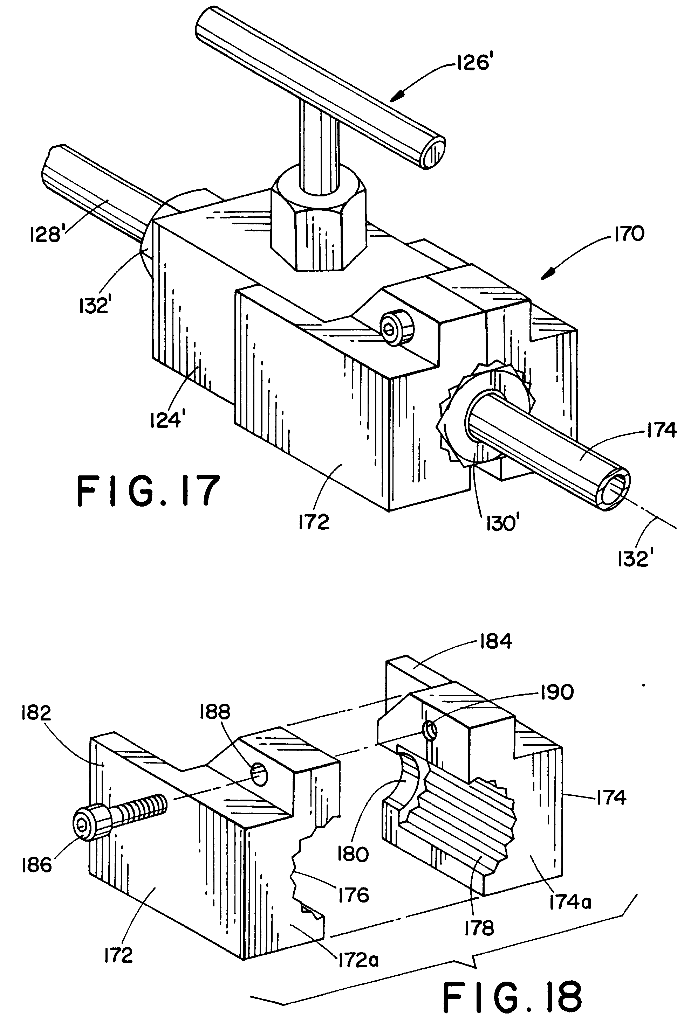

FIGURES 17 and 18 illustrate a further embodiment of a locking assembly which is particularly useful on fluid system devices as discussed with reference to the FIGURES 15 and 16 embodiment. In the FIGURES 17 and 18 embodiment, the fluid system device has the characteristics previously discussed with reference to the fluid system device **122** of the FIGURES 15 and 16 embodiment. For this reason, the fluid system device has been identified with the same reference numerals as used in the FIGURES 15 and 16 device but differentiated by the use of a prime suffix. An element identified with such a numeral is to be considered the same as previously described with reference to the FIGURES 15 and 16 embodiment unless otherwise noted. In the FIGURES 17 and 18 embodiment, the locking assembly **170** includes a pair of first and second components **172** and **174** which are closely similar in design and are basically mirror images of one another. In particular, each of the members **172, 174** are formed from a rigid material such as stainless steel and include first ends **172a** and **174a**, respectively, that are provided with internal contours **176** and **178** that are sized and arranged to engage about the exterior of the coupling nut **130'** as illustrated in FIGURE 17. Associated with each of the contoured first ends **172a, 174a** is a radial flange portion **180** that is arranged to extend radially inward to a location between the inner end of the coupling nut **130'** and the end wall of the body **124'.** Such a flange **180** is shown in FIGURE 18 on the component **174**. A corresponding flange could, of course, be provided on component **172** but, as should be apparent, would not actual be necessary to the functioning of the locking assembly.

The second ends of each of the components **172**, **174** comprises a wall-like extension portion **182** and **184,** respectively, that can engage closely adjacent the opposed side walls of body **124**' when the device is installed as illustrated in FIGURE 17.

The first and second components **172, 174** are clampingly engaged to the nut as shown in FIGURE 17 by a threaded fastener such as the socket head cap screw **186** that is arranged to pass through an opening **188** into threaded engagement with an internally threaded and aligned opening **190** formed in the component **174** in the manner shown. As can be appreciated, when the components **172, 174** are moved in position on a made-up coupling nut **130'** as shown, insertion of the screw **186** and tightening to cause the components **172** and **174** to clamp the nut **130'** prevents the nut **130'** from being moved in a direction to cause loosening of the made up coupling.

It should be appreciated that the gripping ability of the contoured portions **176, 178** can be improved by the addition of internal grooves in the manner described with reference to the grooves **42** in the FIGURES 1 through 7 embodiment.

The invention has been described with reference to the preferred embodiment. Obviously, modifications and alterations will occur to others upon a reading and understanding of this specification. It is intended to include all such modifications and alterations insofar as they come within the scope of the appended claims or the equivalents thereof.

## Claims

1. A tube coupling assembly comprising:
a tube coupling joining a pair of tubes and including a central body terminating in first and second threaded ends with a separate coupling nut threadedly connected to each of the first and second ends;
a releasable lock for preventing undesired unthreading of the coupling nuts from the first and second threaded ends of the central body, the lock including a clamp body member extending adjacent the central body with a first end adjacent the first end of the central body and a second end adjacent the second end of the central body, clamp means carried on the first and second ends of the clamp body member for gripping the coupling nuts and preventing relative motion between the coupling nuts and the central body in directions which could cause unthreading of the nuts, the clamp means including cooperating associated first and second clamp elements joined by connecting means for causing the clamp elements to be driven toward one another to grip the coupling nuts therebetween.

2. The tube coupling assembly as defined in claim 1 wherein at least one of the first clamp elements has a concave configuration and the associated second clamp member has a corresponding concave configuration.

3. The tube coupling assembly as defined in claim 1 or 2 wherein the connecting means includes a threaded connector.

4. The tube coupling assembly as defined in any one of claims 1 to 3 wherein the connecting means further includes a hinge to permit selective relative pivoting movement between the first clamp element and the second clamp element.

5. The tube coupling assembly as defined in any one of claims 1 to 4 wherein there are at least a pair of parallel wrench flats formed on diametrically opposite sides of the coupling nuts.

6. A fluid system device comprising:
a main body having a flow passage extending therethrough and terminating in first and second ends;
fluid tubes connected to the first and second ends of the flow passage in the main body by separate coupling means each including a generally cylindrical internally threaded female coupling nut threadedly joined to the main body at the first and second ends of the passage;
a locking clamp assembly for preventing undesired movement of the female coupling nuts relative to the main body, the locking clamp assembly comprising a rigid clamp body extending along the main coupling body and having a first end joined to one of the female coupling nuts, and a second end including a clamp assembly for encircling the other female nut, the clamp assembly including a clamp member releasably connected to the rigid clamp body by adjustable connecting means for clamping the clamp member to said other female nut member, the clamp member having first and second end portions with the first end portion connected to the clamp body by a hinge means and the second end portion of the second clamp member connected to the clamp body by a threaded connector.

7. The fluid system device as set forth in claim 6 wherein the first end of the clamp body member is releasably joined to the said one of the coupling nuts.

8. The fluid system device as set forth in claim 6 or 7 wherein the clamp member has a clamp surface of concave configuration.

9. The fluid system device as set forth in claim 8 wherein the clamp surface has closely spaced grooves formed therein.

10. A fluid system device comprising:
a main body having a flow passage extending therethrough and terminating in first and second ends;
fluid tubes connected to the first and second ends of the flow passage in the main body by separate coupling means each including threaded coupling nuts threadedly joined to the main body at the first and second ends of the passage;
a locking clamp assembly for preventing undesired movement of the coupling nuts relative to the main body, the locking clamp assembly comprising a rigid clamp body extending along the main coupling body and having a first end joined to a first one of the coupling nuts by a first clamp assembly and a second end joined to the other of the coupling nuts by a second clamp assembly, the first clamp assembly including a clamp member releasably connected to the rigid clamp body by adjustable connecting means for clamping the clamp member to the first one of the coupling nuts, the clamp member having first and second end portions with the first end portion connected to the clamp body by a hinge means and the second end portion of the second clamp member connected to the clamp body by a threaded connector.

11. A fluid system device comprising:
a main body having a flow passage extending thereinto with an outer end of the passage having an axis;
a fluid tube connected to the flow passage in the main body by coupling means including a threaded coupling nut threadedly joined to the body at the outer passage end about the said axis thereof;
a locking assembly for preventing undesired movement of the coupling nut relative to the main body, the locking assembly comprising a rigid first member extending from the main body and terminating in a first end adjacent the coupling nut, the first member of the locking assembly including engagement portions for preventing rotation of the first member about the said axis of the outer passage end, the assembly further including a rigid second member releasably engaged with the coupling nut by engagement means for preventing relative rotation between the rigid second member and the coupling nut about the axis of the outer passage end; and,
releasable connecting means for permitting rigid connection of the first member and the second member in a plurality of positions relatively rotated from each other about the axis of the outer passage end.

12. A fluid system device as defined in claim 11 wherein the engagement portions comprise a pair of spaced arms arranged to engage spaced exterior surfaces of the main body.

13. A fluid system device as defined in claim 11 or 12 wherein the second member includes an opening that receives the coupling nut, the opening being sized and contoured to prevent relative rotation between the second member and the coupling nut.

14. A fluid system device as defined in any one of claims 11 to 13 wherein the releasable connecting means includes a fastener that clampingly joins the first and second members.

15. A fluid system device as defined in claim 14 wherein the said fastener extends through an opening in one of the first and second members.

16. A fluid system device as defined in claim 14 or 15 wherein the said fastener is a threaded fastener.

17. A fluid system device as defined in any one of claims 11 to 16 wherein there is stop means associated with one of the first and second members for preventing movement of the first and second members in a direction along the axis of the outer end of the passage.

18. A fluid system device as defined in claim 17 wherein the stop means comprises an element positioned between the main body and the coupling nut.

19. A fluid system device comprising:
a main body having a flow passage extending thereinto, an outer end of the flow passage being defined by a cylindrical end portion of the main body, said cylindrical end portion having a central axis;
a fluid tube connected in flow relationship to the flow passage by coupling means including a threaded coupling nut threadedly joined to the cylindrical end portion of the main body;
a locking assembly for preventing undesired movement of the coupling nut relative to the main body comprises rigid first and second components extending between said main body and said coupling nut on opposite sides of the central axis of the cylindrical end portion, each of the first and second components having a first end contoured to engage about opposite sides of the coupling nut and a second end to engage the main body, and threaded fastening means to attach the first and second components to each other with their first ends in clamping engagement with the coupling nut and their second ends on opposite sides of the main body.

20. The fluid system device as set forth in claim 19 wherein the coupling nut has wrench flats on the exterior thereof.

21. The fluid system device as set forth in claim 19 or 20 wherein at least one of the first and second components includes a rigid portion extending inward toward the central axis between the main body and the coupling nut to limit axial movement of the locking assembly relative to the central axis.
